# EUROPÄISCHE PATENTSCHRIFT

(11) **EP 3 041 403 B1**
(45) Veröffentlichungstag und Bekanntmachung des Hinweises auf die Patenterteilung: **03.11.2021**
(21) Anmeldenummer: 14771792.0
(22) Anmeldetag: 26.08.2014
(51) Int. Cl.: A61B 5/00, G01N 21/27, G01N 21/59

(54) **VERFAHREN ZUR ERHÖHUNG DER OPTISCHEN TRANSPARENZ VON BEREICHEN EINER GEWEBEPROBE**
METHOD FOR ENHANCING THE OPTICAL TRANSPARENCY OF AREAS OF A TISSUE SAMPLE
PROCÉDÉ D'AUGMENTATION DE LA TRANSPARENCE OPTIQUE DE ZONES D'UN ÉCHANTILLON TISSULAIRE

(30) Priorität: 26.08.2013 DE 102013216934
(43) Veröffentlichungstag der Anmeldung: 13.07.2016
(73) Patentinhaber: Leica Microsystems CMS GmbH, 35578 Wetzlar (DE)
(72) Erfinder: SÄGMÜLLER, Bernd, 69514 Laudenbach (DE)
(74) Vertreter: Bradl, Joachim
(86) Internationale Anmeldenummer: PCT/EP2014/068045
(87) Internationale Veröffentlichungsnummer: WO 2015/028453

(56) Entgegenhaltungen:
- WO-A1-00/24454
- GB-A- 2 377 757
- US-A1- 2012 296 238
- US-A1- 2013 274 837
- None

## Beschreibung

### Beschreibung

Die vorliegende Erfindung betrifft ein Verfahren zur Erhöhung der optischen Transparenz von Bereichen einer Gewebeprobe.

### Stand der Technik

Die Identifizierung dreidimensionaler Strukturbeziehungen in intakten biologischen Gewebeproben durch mikrooptische Techniken ist aufgrund der häufig weitgehend fehlenden optischen Transparenz solcher Gewebeproben herkömmlicherweise mit Problemen behaftet. Insbesondere betrifft dies die Untersuchung von Strukturbeziehungen zwischen den Neuronen in Nerven-bzw. Hirngewebe. Herkömmliche Verfahren sehen zu diesem Zweck die Erfassung mikroskopischer Serienschnitte in Form von digitalen Bildern vor, aus denen dann eine Rekonstruktion der dreidimensionalen Beziehungen vorgenommen wird. Dies ist jedoch zumindest sehr aufwendig und gegebenenfalls fehlerbehaftet.

Eine neuere Veröffentlichung (K. Chung et al.: Structural and molecular interrogation of intact biological systems, Nature 497, 332-337, 2013) schlägt vor diesem Hintergrund ein Verfahren zur Erhöhung der optischen Transparenz von Bereichen einer entsprechenden Gewebeprobe vor. Wie dort erläutert, ist die fehlende optische Transparenz im Wesentlichen auf Lipiddoppelschichten zurückzuführen. An den durch diese gebildeten Grenzflächen wird eindringendes Licht gestreut. Die erwähnte Veröffentlichung schlägt daher die nichtdestruktive Entfernung derartiger Lipiddoppelschichten vor, d.h. eine Entfernung, bei der die übrige Gewebeprobe strukturell möglichst weitgehenderhalten bleibt.

Hierzu wird die Gewebeprobe beispielsweise mit Hydrogelmonomeren (z.B. Acrylamid und Bisacrylamid), Formaldehyd und thermoreaktiven Initiatoren getränkt. Das Formaldehyd sorgt dabei einerseits für eine Quervernetzung des Gewebes und koppelt andererseits die Hydrogelmonomere kovalent mit Biomolekülen wie Proteinen und Nukleinsäuren. Anschließend wird thermisch eine Polymerisation der entsprechend gekoppelten Monomere zu einem Hydrogelnetz eingeleitet. Die genannten Biomoleküle werden in das hierdurch geschaffene dreidimensionale Hydrogel eingebunden und damit stabilisiert.

Moleküle ohne koppelbare funktionelle Gruppen, insbesondere Lipide der Lipiddoppelschichten, bleiben ungebunden und können daher aus der geschaffenen Struktur extrahiert werden. Zweckmäßigerweise kommt hierzu ein ionisches Extraktionsverfahren zum Einsatz, weil hierdurch die mikrooptische Untersuchung, z.B. durch Fluoreszenzmikroskopie, nicht beeinflusst wird.

Zur Extraktion der Lipide können beispielsweise Natriumdodecylsulfat-(SDS-) Micellen in wässrigen Lösungsmitteln zum Einsatz kommen, die aufgrund ihrer negativen Gesamtladung unter neutralen bis alkalischen Bedingungen in einem angelegten elektrischen Feld migrieren und hierdurch durch die entsprechend vorbereitete Gewebeprobe getrieben werden können.

Zu weiteren Details eines entsprechenden Verfahrens sei auf die erwähnte Veröffentlichung verwiesen. Es sei jedoch betont, dass die vorliegende Erfindung nicht nur in der dort offenbarten spezifischen Verfahrensvariante zum Einsatz kommen kann, sondern auch in anderen Verfahren Verwendung finden kann, in welchen zumindest in bestimmten Verfahrensschritten eine graduelle Erhöhung der optischen Transparenz von Bereichen einer Gewebeprobe beobachtet werden kann.

Derartige Verfahren werden herkömmlicherweise rein manuell durchgeführt, d.h. die Kontrolle des Erfolgs eines entsprechenden Verfahrens erfolgt visuell durch einen Experimentator. Derartige Verfahren sind damit in der Praxis arbeitsaufwändig und schlecht reproduzierbar. Insbesondere im Umfeld medizinischer Forschungsvorhaben erweist sich letzterer Umstand als Nachteil, weil hierdurch keine standardisierte Probenvorbereitung möglich ist.

Aus der WO 00/24454 A1 ist ein Verfahren bekannt, bei dem die optische Transparenz von Bereichen einer Gewebeprobe gemessen wird.

Die US 2012/296238 A1 offenbart, dass Messungen optischer Parameter einer Probe in situ in einer Prozesskammer durchgeführt werden können, um optische Parameter, wie etwa die Transparenz zu messen.

Die Erfindung will hier Abhilfe schaffen und entsprechende Verfahren zur Erhöhung der optischen Transparenz von Bereichen von Gewebeproben erleichtern und insbesondere im Sinne einer erhöhten Reproduzierbarkeit verbessern.

### Offenbarung der Erfindung

Vor diesem Hintergrund schlägt die vorliegende Erfindung ein Verfahren zur Erhöhung der optischen Transparenz (also einer sogenannten Klärung, engl. Clearing) von Bereichen einer Gewebeprobe mit den Merkmalen des unabhängigen Patentanspruchs vor. Bevorzugte Ausgestaltungen sind Gegenstand der abhängigen Patentansprüche sowie der nachfolgenden Beschreibung.

Die vorliegende Erfindung geht von einem Verfahren zur Erhöhung der optischen Transparenz von Bereichen einer Gewebeprobe aus, wie es grundsätzlich zuvor erläutert wurde. In einem derartigen Verfahren wird die Gewebeprobe in eine Prozesskammer eingebracht und in der Prozesskammer mit zumindest einem Prozessfluid getränkt (infiltriert). Wie erläutert, kann ein derartiges Verfahren insbesondere auch die Verwendung mehrerer Prozessfluide umfassen, die, beispielsweise thermisch, zur Reaktion gebracht werden können und Strukturen der Gewebeprobe miteinander vernetzen und diese damit stabilisieren.

Nach der Vernetzung bzw. Stabilisierung wird in einem derartigen Verfahren eine Entfernung lichtstreuender Strukturen in der Gewebeprobe bewirkt, wie eingangs erläutert beispielsweise durch Verwendung von Tensidmicellen, die in einem elektrischen Feld migrieren. Wie erläutert, ist ein solches, herkömmlicherweise rein manuell durchgeführtes Verfahren aufwändig und fehlerbehaftet.

Wird im Rahmen der vorliegenden Erfindung der Begriff Prozessfluid verwendet, sind hiervon sämtliche, in der Regel flüssige, Substanzen umfasst, die in Form von Einzelverbindungen oder Gemischen in entsprechenden Verfahren zum Einsatz kommen können. Insbesondere handelt es sich hierbei um die erwähnten Prozessfluide, die die optische Transparenz bewirken, indem sie störende Strukturen aus der Gewebeprobe ausspülen, jedoch auch um die zuvor verwendeten Stabilisierungs bzw. Quervernetzungsmittel, die das anschließende störungsfreie Ausspülen erlauben. Prozessfluide können auch Lager-bzw. Einbettmedien sein. Bei Bereichen einer Probe, deren optische Transparenz erhöht wird, kann es sich beispielsweise um Membranstrukturen oder Vesikelstapel handeln. Die Transparenz anderer Bereiche, beispielsweise der im Rahmen eines nachgeschalteten mikrooptischen Verfahrens zu untersuchenden Neuronen, bleibt hingegen unverändert oder zumindest teilweise unverändert.

Erfindungsgemäß wird vorgeschlagen, die optische Transparenz der Gewebeprobe zumindest während eines Klärungszeitraums, in dem die Gewebeprobe in die Prozesskammer eingebracht ist und die Entfernung der lichtstreuenden Strukturen in der Gewebeprobe bewirkt wird, mittels einer der Prozesskammer zugeordneten optischen Transparenzmessanordnung zu überwachen, bis durch Infiltration des Prozessfluids und Entfernung lichtstreuender Strukturen aus der Gewebeprobe ausreichend hohe Transparenz hergestellt ist.

Unter einem Klärungszeitraum wird im Rahmen der vorliegenden Erfindung dabei der Zeitraum verstanden, in dem die eigentliche Entfernung der lichtstreuenden Strukturen erfolgt. In dem eingangs erläuterten Verfahren handelt es sich hierbei um den Verfahrensschritt, in dem die Lipiddoppelschichten mittels Tensidmicellen aufgelöst und aus der Probe heraustransportiert werden. Die vorab bereits erfolgten Schritte, d.h. die Quervernetzung bzw. Stabilisierung der übrigen Gewebebestandteile, zählt nicht zu dem eigentlichen Klärungszeitraum. Während dieser vorhergehenden Schritte, gegebenenfalls aber auch während nachfolgender Schritte nach dem Klärungszeitraum, kann zwar ebenfalls eine Überwachung erfolgen, jedoch wird während solcher Zeiträume typischerweise keine Erhöhung der Transparenz einer entsprechenden Gewebeprobe beobachtet.

Das erfindungsgemäße Verfahren kann auch mehrere Klärungszeiträume umfassen, beispielsweise bei einer Klärung durch unterschiedliche chemischphysikalische Verfahren, wie unten erläutert. Während eines jeden solchen Klärungszeitraums kann eine Überwachung erfolgen.

Insgesamt erlaubt die vorliegende Erfindung damit eine Standardisierung eines entsprechenden Verfahrens zur Erhöhung der optischen Transparenz. Durch die erläuterte Überwachung, die zusätzlich auch weitere Überwachungsverfahren einschließen kann, beispielsweise von chemischen und/oder physikalischen Parametern von Prozessfluiden und/oder der Gewebeprobe, werden gegenüber dem Stand der Technik insbesondere reproduzierbarere Ergebnisse erzielt. Dies hilft dem Praktiker dabei, die bisher vorhandenen Unwägbarkeiten bei der Herstellung entsprechend transparenter Gewebeproben auszuschließen.

Die vorliegende Erfindung eignet sich beispielsweise im Zusammenhang mit mikrooptischen Verfahren auf Grundlage der Multiphotonentechnik (MP) bzw. entsprechender bildgebender Verfahren (sogenanntes MP-Imaging). Solche Verfahren eignen sich besonders für die Untersuchung altersbedingter degenerativer Erkrankungen (z.B. neurodegenerative Krankheiten) und degenerativer Erkrankungen, die auf den Lebensstil der betroffenen Patienten zurückzuführen sind (sogenannte Lifestyle-Related Diseases). Dies kann auch insbesondere am Tiermodell erfolgen, beispielsweise durch die Untersuchung der Gehirne entsprechend behandelter Mäuse, Ratten, Kaninchen usw.

Durch die Erhöhung der optischen Transparenz können in die Gewebeprobe eingebrachte Fluorophore besser sichtbar gemacht werden. Die Streuung durch umliegende Bereiche der Gewebeprobe, insbesondere die erläuterten Lipiddoppelschichten, wird minimiert bzw. eliminiert. Durch das erfindungsgemäße Verfahren können optische Eindringtiefen in die Gewebeprobe von bis zu 5 bis 6 mm, gegebenenfalls auch mehr, beispielsweise von bis zu 10 mm, realisiert werden.

Die im Rahmen des erfindungsgemäßen Verfahrens eingesetzte Transparenzmessanordnung umfasst vorteilhafterweise eine Lichtquelle und einen lichtsensitiven Detektor, wobei die Gewebeprobe zwischen der Lichtquelle und dem lichtsensitiven Detektor angeordnet wird. Ein entsprechender Detektor misst dabei beispielsweise das Licht, das ausgehend von der Lichtquelle die Probe durchsetzt und auf den Detektor auftrifft, d.h. dessen transmittierten Anteil.

Im Rahmen des erfindungsgemäßen Verfahrens können jedoch auch mehrere Lichtquellen und/oder lichtsensitive Detektoren eingesetzt werden. Entsprechende Detektoren können beispielsweise dazu verwendet werden, Streulicht, das von der Probe bzw. von in dieser verbliebenen lichtstreuenden Strukturen reflektiert bzw. gestreut wird, zu erfassen. Ein entsprechender weiterer lichtsensitiver Detektor ist dabei vorteilhafterweise entgegen der Lichtabstrahlrichtung der Lichtquelle ausgerichtet oder außeraxial zur optischen Achse dieser Lichtquelle angeordnet. Er kann dabei entweder nur einen reflektierten, nur einen gestreuten und/oder beide Anteile des eingestrahlten Lichts erfassen.

Auch mehrere Lichtquellen können verwendet werden, beispielsweise Lichtquellen, die mit unterschiedlichen Wellenlängen arbeiten, beispielsweise mit Infrarot-, UV-und/oder, ggf. farbigem, Licht im sichtbaren Wellenlängenbereich. Auf diese Weise kann eine wellenlängenselektive Messung der Transparenz erfolgen, die auch insbesondere mit einem nachgeschalteten Untersuchungsverfahren abgestimmt werden kann. Beispielsweise kann auch ein Verhältnis einer Transmission im infraroten zu einer Transmission im ultravioletten bzw. jeweils zu einer Transmission im sichtbaren Wellenlängenbereich verwendet werden.

In dem Verfahren kann vorteilhafterweise auch zumindest eine Lichteigenschaft des durch die Lichtquelle bereitgestellten Lichts und/oder zumindest eine Detektionseigenschaft des lichtsensitiven Detektors beeinflusst werden. Beispielsweise können in beiden Fällen geeignete Filter zum Einsatz kommen. Ist eine selektive Erfassung nur des ungehindert transmittierten Anteils des Lichts erwünscht, kann beispielsweise ein erster Polarisationsfilter vor der Lichtquelle und ein zweiter, identisch ausgerichteter Polarisationsfilter vor dem lichtsensitiven Detektor angebracht werden. Durch die Streuung verliert das Licht seine Polarisation, so dass in diesem Fall nur das transmittierte Licht mittels des lichtsensitiven Detektors detektiert wird. Ein weiterer Detektor kann ohne einen entsprechenden Filter ausgebildet werden, so dass dieser einen Summenparameter aus transmittiertem und gestreutem Licht erfassen kann. Das erfindungsgemäße Verfahren kann in diesem Fall auch beispielsweise eine Differenzbildung zwischen transmittierten und gestreuten Lichtanteilen umfassen.

Wiederum kann die Beeinflussung des durch die Lichtquelle bereitgestellten Lichts und/oder der Detektionseigenschaft des lichtsensitiven Detektors mit einem nachgeschalteten Untersuchungsverfahren abgestimmt werden. Soll beispielsweise eine Fluoreszenz in einem bestimmten Wellenbereich erfasst werden, kann ein entsprechender Detektor hieran angepasst und das erfindungsgemäße Verfahren gerade so lange durchgeführt werden, bis das detektierte Licht ein akzeptables Maximum erreicht, um die Hintergrundstrahlung im nachgeschalteten Fluoreszenzverfahren zu reduzieren, jedoch ohne die Gewebeprobe übermäßig zu belasten. Entsprechendes gilt für das durch die Lichtquelle bereitgestellte Licht.

Wie zu dem eingangs erläuterten Verfahren ausgeführt, umfassen Verfahren zur Erhöhung der optischen Transparenz von Bereichen von Gewebeproben typischerweise, die Gewebeprobe während des erläuterten Klärungszeitraums in einer Prozesskammer zwischen zwei zumindest zeitweise strombeaufschlagten Elektroden anzuordnen. Die Entfernung der lichtstreuenden Strukturen wird in diesem Fall zumindest teilweise durch Migrieren lassen von Tensidmicellen durch die Gewebeprobe bewirkt, in denen sich beispielsweise die Lipide der Lipiddoppelschichten anreichern. Wie erläutert, ist ein derartiges Verfahren besonders vorteilhaft, weil hierdurch ein nachgeschaltetes Fluoreszenzverfahren nicht oder kaum beeinflusst wird.

Wird eine derartige Klärung mittels Tensidmicellen eingesetzt, kann das erfindungsgemäße Verfahren insbesondere umfassen, zumindest zeitweise einen Stromfluss zwischen den genannten Elektroden zu überwachen. Beispielsweise kann über Veränderungen im Stromfluss, der Veränderungen im Migrationsverhalten der Tensidmicellen entspricht, der Verlauf eines entsprechenden Klärungsverfahrens beurteilt werden. Ferner kann über einen derartigen Stromfluss eine definierte Migrationsgeschwindigkeit der Micellen eingestellt werden, indem die an den Elektroden anliegende Spannung in geeigneter Weisebeeinflusst wird. Ein derartiges Verfahren kann vollautomatisch in Form eines Regelkreises ablaufen, so dass eine besonders reproduzierbare und für den Benutzer einfach durchzuführende Erhöhung der Transparenz (Klärung) erfolgen kann.

Alternativ oder zusätzlich kann auch vorgesehen sein, die Entfernung der lichtstreuenden Strukturen zumindest teilweise durch Herauslösen mittels wenigstens eines organischen Lösungsmittels durchzuführen. Eine derartige Herauslösung vereinfacht ein entsprechendes Verfahren, weil keine Elektrodenanordnung zum Einsatz kommen muss. Besondere Vorteile bieten entsprechende Verfahrensschritte in Kombination; so können sich beispielsweise Anteile der lichtstreuenden Strukturen, die sich mittels der Tensidmicellen nicht aus dem Gewebeverband herauslösen lassen, durch das organische Lösungsmittel entfernen lassen.

In den zuvor erläuterten Verfahren kann es besonders vorteilhaft sein, zumindest eine Temperatur des zumindest einen Prozessfluids in der Prozesskammer zu überwachen. Auch eine derartige Überwachung trägt zur Erhöhung der Reproduzierbarkeit eines entsprechenden Verfahrens bei. Beispielsweise wird, wie eingangs erläutert, insbesondere die Vernetzung der nicht zu entfernenden Strukturen der Probe häufig durch thermoaktivierte Polymerisation durchgeführt. Durch exakte Überwachung eines hierbei auftretenden bzw. verwendeten Temperaturverlaufs lassen sich eine reproduzierbare Vernetzung und damit eine weitgehende Erhaltung der erwünschten Probenstrukturen erzielen.

In allen Fällen kann die vorliegende Erfindung auch die Verwendung einer Vakuum- oder Druckinfiltration umfassen, bei der die entsprechenden Prozessfluide in die Probe durch ein (voriges) Anlegen eines Vakuums oder mithilfe von Druck eingebracht werden. Das erfindungsgemäße Verfahren kann die Überwachung eines entsprechenden Vakuums bzw. Drucks mit entsprechenden hierzu vorgesehenen Mitteln umfassen. In einem solchen Fall ist die Prozesskammer vakuum-bzw. druckfest ausgebildet und weist eine zumindest teilweise vakuum-bzw. druckdichte Abdichtung auf. Nach Einbringung der Probe in diese Prozesskammer kann diese beispielsweise mittels eines entsprechend ausgebildeten Deckels verschlossen werden und die weitere Bearbeitung im geschlossenen Zustand erfolgen.

Es kann auch vorteilhaft sein, zumindest zeitweise zumindest eine optische Eigenschaft des zumindest einen Prozessfluids mit der optischen Transparenzmessanordnung und/oder einer weiteren optischen Anordnung zu überwachen. Hierbei kann es sich beispielsweise um ein Absorptionsverhalten bei bestimmten Wellenlängen handeln. Eine Änderung der Absorption kann hierbei beispielsweise dadurch zustande kommen, dass eine vorzunehmende Reaktion abgeschlossen ist und/oder dass die lichtstreuenden Strukturen aus der Gewebeprobe herausgelöst sind. Beispielsweise um einen für die jeweilige Reaktion erforderlichen pH-Wert möglichst exakt einzuhalten, kann in dem zumindest einen Prozessfluid auch beispielsweise ein pH-Indikator gelöst werden, dessen Farbumschlag mittels der optischen Transparenzmessanordnung und/oder einer weiteren optischen Anordnung überwacht werden kann.

Auch weitere physikalische und/oder chemische Eigenschaften der Gewebeprobe und/oder des zumindest einen Prozessfluids können im Rahmen des erfindungsgemäßen Verfahrens überwacht werden. Hierbei handelt es sich beispielsweise um pH-Werte, Leitfähigkeiten, Ionenstärken, Viskositäten und dergleichen.

Eine im Rahmen des erfindungsgemäßen Verfahrens eingesetzte Prozesskammer kann auch insbesondere Mittel zum Austausch des oder der verwendeten Prozessfluide aufweisen. Beispielsweise können hierzu geeignete Speicherbehälter vorgesehen sein, die mittels Leitungen mit der Prozesskammer gekoppelt sind. Mittels geeigneter Pumpen und/oder Ventile, die durch eine der Prozesskammer zugeordnete Steuereinheit automatisch angesteuert werden können, lassen sich derartige Prozessfluide automatisch, beispielsweise entsprechend einem vorgegebenen Bearbeitungsprotokoll, mischen, temperieren und/oder in oder durch die Prozesskammer führen. Insgesamt ermöglicht die Erfindung damit die vollautomatische Durchführung eines Klärungsverfahrens.

Das erfindungsgemäße Verfahren ist besonders vorteilhaft, wenn hierbei die Gewebeprobe unter Verwendung von lagedefinierenden Mitteln in der Prozesskammer angeordnet wird. Unter lagedefinierenden Mitteln werden hier Strukturen verstanden, die eine definierte Ausrichtung der Probe in der Prozesskammer vorgeben bzw. sicherstellen. Beispielsweise kann eine entsprechende Probe mit Bezugspunkten oder Bezugsstrukturen versehen sein, die mit entsprechenden Bezugspunkten oder Bezugsstrukturen in der Prozesskammer bzw. einer entsprechenden Aufnahme ausgerichtet werden können. Auch bei einer verdrehsicheren Aufnahme für eine Gewebeprobe handelt es sich um lagedefinierende Mittel.

Auch die Vorrichtung, die im erfindungsgemäßen Verfahren verwendet wird, profitiert von den zuvor erläuterten Vorteilen. Eine derartige Vorrichtung weist eine Prozesskammer zur Aufnahme einer Gewebeprobe in zumindest einem Prozessfluid zur Entfernung lichtstreuender Strukturen in der Gewebeprobe auf. Die Vorrichtung zeichnet sich dadurch aus, dass sie eine Transparenzmessanordnung zum Überwachen der optischen Transparenz der Gewebeprobe zumindest während eines Klärungszeitraums, in dem die Gewebeprobe in die Prozesskammer eingebracht ist und die Entfernung der lichtstreuenden Strukturen in der Gewebeprobe vorgenommen wird, aufweist. Die Transparenzmessanordnung ist wie erläutert ausgebildet.

Insbesondere könnte eine Vorrichtung zur Durchführung eines Verfahrens nach einem der vorstehenden Ansprüche eingerichtet sein.

Vorteilhafterweise umfasst eine derartige Vorrichtung ferner eine Steuereinheit zum Ansteuern der Transparenzmessanordnung und eine Auswerteeinheit zum Auswerten zumindest eines durch die Transparenzmessanordnung bereitgestellten Messsignals. Die Ansteuerung und Auswertung erfolgt vorzugsweise vollautomatisch, so dass sich eine besonders einfache und reproduzierbare Durchführung eines entsprechenden Verfahrens ergibt.

Wie ebenfalls bereits teilweise erläutert, umfasst eine derartige Vorrichtung ferner strombeaufschlagbare Elektroden innerhalb der Prozesskammer und eine Stromquelle zum Beaufschlagen dieser Elektroden. Auch diese kann durch die Steuereinheit bzw. die Auswerteeinheit angesteuert bzw. ausgewertet werden. Die Elektroden können in unterschiedlicher Weise, beispielsweise platten-, gitter- und/oder halbzylinderförmig, ausgebildet sein, so dass sich bei ihrer Bestromung ein optimiertes elektrisches Feld ergibt.

Eine derartige Vorrichtung umfasst vorteilhafterweise ferner Messmittel zum Bestimmen zumindest einer physikalischen und/oder chemischen Eigenschaft der Gewebeprobe und/oder des zumindest einen Prozessfluids und/oder lagedefinierende Mittel zum Anordnen der Gewebeprobe in der Prozesskammer. Auch Druck- und/oder Vakuummittel zur Druck-bzw. Vakuuminfiltration können, wie bereits erläutert, vorgesehen sein.

Die Erfindung und Ausführungsformen der Erfindung werden nachfolgend unter Bezugnahme auf die beigefügten Zeichnungen weiter erläutert.

### Figurenbeschreibung

Figur 1 veranschaulicht ein Verfahren zur Erhöhung der optischen Transparenz von Bereichen einer Gewebeprobe gemäß dem Stand der Technik und gemäß einer Ausführungsform der Erfindung in Form eines schematischen Ablaufplans.
Figur 2 zeigt eine Vorrichtung gemäß einer Ausführungsform der Erfindung in schematischer Darstellung.

### Ausführliche Beschreibung der Zeichnungen

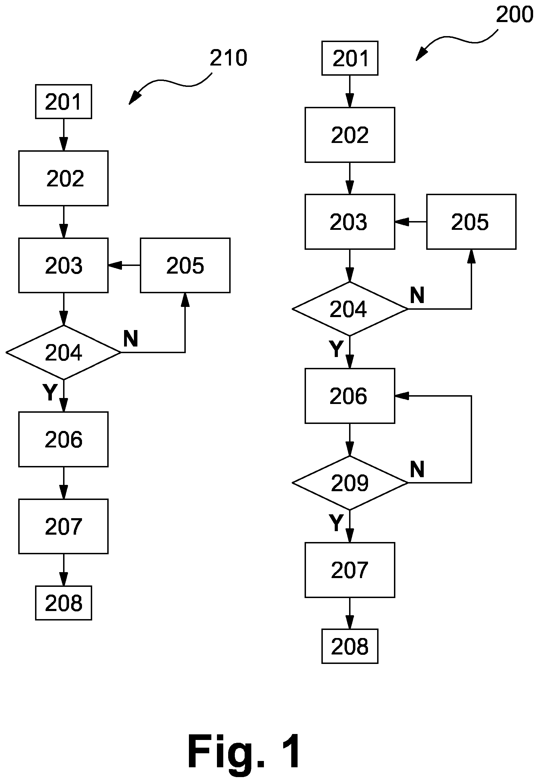

In Figur 1 ist zunächst ein Verfahren zur Erhöhung der optischen Transparenz von Bereichen einer Gewebeprobe gemäß dem Stand der Technik in Form eines schematischen Ablaufplans, der insgesamt mit 210 bezeichnet ist, veranschaulicht.

Es sei betont, dass entsprechende Verfahren 210, insbesondere unter Berücksichtigung der jeweils verwendeten Reaktionsprinzipien, Prozessmedien usw., auch in abweichender Form durchgeführt werden können. Die Anzahl und Reihenfolge der in der Figur 1 dargestellten Verfahrensschritte ist daher nicht einschränkend.

Ein entsprechendes Verfahren 210 wird jedoch stets vor der Durchführung eines nachgeschalteten bildgebenden Verfahrens durchgeführt. Zwischen den Verfahren 210 und nachgeschalteten Verfahrensschritten der Bildgebung können beliebige weitere Verfahrensschritte vorgesehen sein, beispielsweise zur Stabilisierung einer entsprechenden Gewebeprobe für die Lagerung und dergleichen. Weitere Verfahrensschritte, die vor dem Verfahren 210 oder nach diesem durchgeführt werden, umfassen beispielsweise die Färbung, immunhistochemische Markierung oder Einbettung entsprechender Gewebeproben.

Das dargestellte Verfahren 210 wird an Gewebeproben vorgenommen, wie sie grundsätzlich zuvor erläutert wurden, beispielsweise an Gewebeproben von Nerven- oder Hirngewebe. Entsprechende Verfahren können auch an Gewebeproben vorgenommen werden, die in eingelagerter Form vorliegen, beispielsweise an formalinfixierten Dauerpräparaten, forensischen Gewebeproben usw.

Das Verfahren beginnt mit einem Schritt 201, in dem eine entsprechende Gewebeprobe bereitgestellt wird. Beispielsweise wird eine derartige Gewebeprobe in Schritt 201 in eine Prozesskammer eingelegt und dort befestigt.

In einem nachfolgenden Schritt 202 erfolgt die Zugabe zumindest eines Prozessfluids, beispielsweise zur Stabilisierung von Strukturen der Gewebeprobe, wie zuvor erläutert. Es können auch mehrere entsprechender Schritte 202, nacheinander oder jeweils optional, durchgeführt werden, beispielsweise um eine entsprechende Gewebeprobe für die nachfolgenden Verfahrensschritte vorzubereiten. Bestimmte Gewebeproben, beispielsweise formalinfixierte Dauerpräparate, erfordern ggf. eine längere und/oder mehrschrittigere Probenvorbereitung als andere, beispielsweise Frischproben.

In einem Schritt 203 erfolgt beispielsweise eine Fixierung bzw. Stabilisierung der Gewebeprobe durch Quervernetzung. Beispielsweise erfolgt hierbei eine Erwärmung, um eine Reaktion des oder der in Schritt 202 zugegebenen Prozessfluide zu bewirken. Eine entsprechende Fixierung bzw. Stabilisierung kann auch das Einwirkenlassen weiterer Prozessfluide und/oder das Einstellen bestimmter Reaktionsbedingungen (Temperaturen, pH-Werte, Ionenstärken usw.) handeln.

In einem nachfolgenden Schritt 204 wird anhand bekannter Kriterien überprüft, ob Schritt 203 erfolgreich war und/oder ausreichend lange durchgeführt wurde. Ist dies nicht der Fall (Nein, N), erfolgt beispielsweise in Schritt 205 der Austausch des oder der Prozessfluide, eine Änderung der Reaktionsbedingungen usw. Das Verfahren wird entsprechend Schritt 203 weiter durchgeführt, und zwar so lange, bis in Schritt 204 ein Erfolg festgestellt wurde (Ja, Y).

In diesem Fall wird das Verfahren mit Schritt 206 fortgesetzt, in dem beispielsweise die Gewebeprobe gespült und/oder lichtstreuende Strukturen aus dieser entfernt werden. Insbesondere der Schritt 206 wird in herkömmlichen Verfahren 210 rein manuell durchgeführt und kontrolliert, d.h. es wird beispielsweise visuell beurteilt, ob die Transparenz der Probe ausreichend erhöht wurde.

Es folgt ein Schritt 207, in dem die Gewebeprobe beispielsweise in ein geeignetes Lagerfluid eingebracht wird, um diese zur anschließenden Untersuchung strukturell möglichst unverändert lagern zu können.

Das Verfahren 210 kommt mit Schritt 208 zum Abschluss, in welchem eine entsprechend vorbereitete Gewebeprobe vorliegt.

In Figur 1 ist auch ein Verfahren gemäß einer Ausführungsform der Erfindung in Form eines schematischen Ablaufplans dargestellt und mit 200 bezeichnet.

Das Verfahren 200 unterscheidet sich von dem zuvor erläuterten Verfahren 210 im Wesentlichen durch einen weiteren Verfahrensschritt 209, der im Rahmen der Erfindung umfasst, mittels einer optischen Transparenzmessanordnung, die einer Prozesskammer zugeordnet ist, in welcher die Gewebeprobe vorliegt, die Entfernung lichtstreuender Strukturen in der Gewebeprobe zu überwachen. Während der Durchführung des Verfahrensschritts 210, beispielsweise während eines Spülens einer entsprechenden Gewebeprobe und/oder der Durchführung eines zuvor erläuterten Verfahrens unter Verwendung von Tensidmicellen, erhöht sich die Transparenz der Gewebeprobe. Ergibt eine Überwachung bzw. eine Überprüfung in Schritt 209, dass noch keine ausreichende Transparenz vorliegt (N), wird das Verfahren mit Schritt 206 weiter durchgeführt. Wird eine ausreichende Transparenz hergestellt (Y) wird das Verfahren wie erläutert mit Schritt 207 fortgesetzt.

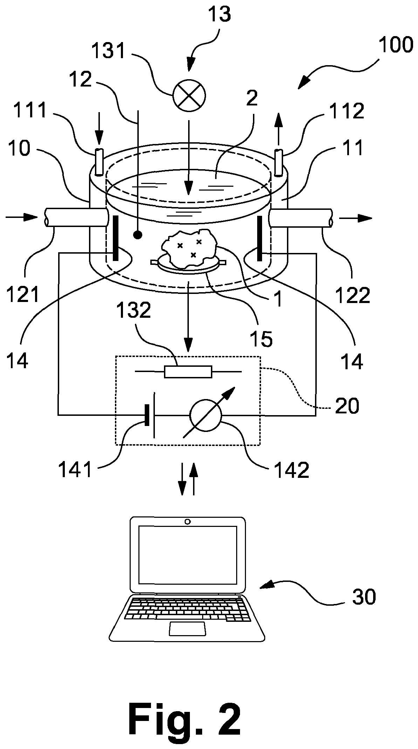

In Figur 2 ist eine Vorrichtung gemäß einer Ausführungsform der Erfindung schematisch dargestellt und insgesamt mit 100 bezeichnet.

Die Vorrichtung 100 umfasst im dargestellten Beispiel eine Prozesskammer 10, in die ein Prozessfluid 2 eingebracht ist. Eine Gewebeprobe 1 ist in dem Prozessfluid 2 in der Prozesskammer 10 angeordnet. Das Prozessfluid 2 kann über geeignete Fluideinlässe 121 und Fluidauslässe 122 durch die Prozesskammer geführt werden, wie durch die entsprechenden Pfeile in Figur 2 veranschaulicht.

Im dargestellten Beispiel ist die eigentliche Prozesskammer 10 von einem Mantelbereich 11 umgeben, welcher mit einem geeigneten Temperierfluid, beispielsweise einem Kühlmittel und/oder einem flüssigen oder gasförmigen Heizmedium, beschickt werden kann. Dies ermöglicht die Temperierung des Prozessfluids 2 in der Prozesskammer 10. Zum Einspeisen bzw. Entnehmen eines derartigen Temperierfluids sind Einlässe 111 und Auslässe 112 vorgesehen. Alternativ zur Verwendung eines Temperierfluids kann auch eine Temperierung mit physikalischen Mitteln erfolgen, z.B. mittels einer Widerstandsheizung und/oder mit Peltierelementen.

Der Prozesskammer ist eine Transparenzmessanordnung 13 zugeordnet, die hier stark vereinfacht dargestellt ist. Die Transparenzmessanordnung 13 umfasst zumindest eine Lichtquelle 131 und einen lichtsensitiven Detektor 132. Abweichend zu der Darstellung in Figur 2 können die Lichtquelle 131 und der lichtsensitive Detektor 132 insbesondere auch vor bzw. hinter einer entsprechenden Prozesskammer 10 angeordnet sein, so dass eine entsprechende Gewebeprobe von dem Licht der Lichtquelle 131 horizontal durchstrahlt werden kann. Wie erläutert, können mehrere Lichtquellen 131 und/oder lichtsensitive Detektoren 132, Filter, Optiken und dergleichen vorgesehen sein.

Die Vorrichtung 100 umfasst ferner zwei Elektroden 14. Zur Bestromung der Elektroden 14 ist eine Stromquelle 141, ggf. mit entsprechenden Spannungs- und/oder Stromstellmitteln 142, vorgesehen. Wie mehrfach erläutert, kann hierdurch ein durchgeführtes Elektrophoreseverfahren besser kontrolliert werden.

Der lichtsensitive Detektor 132 und die zuletzt erläuterten Elemente können in einer Steuereinheit 20, hier gestrichelt veranschaulicht, angeordnet sein, die beispielsweise mit einem Rechner 30 gekoppelt sein kann. Es versteht sich, dass Teile der Steuereinheit 20 auch in dem Rechner integriert sein können oder umgekehrt. Mittels der Steuereinheit 20 und/oder des Rechners 30 können jeweils Parameter des durchzuführenden Verfahrens 200 eingestellt werden.

Die Vorrichtung 100 weist ferner innerhalb der Prozesskammer 10 lagedefinierende Mittel 15 auf, die zum Anordnen der Gewebeprobe in der Prozesskammer 10 eingerichtet sind, insbesondere zu deren Ausrichtung wie zuvor erläutert.

Innerhalb der Prozesskammer 10 und/oder extern zu dieser können auch weitere Erfassungsmittel 12 vorgesehen sein, beispielsweise um eine Temperatur, einen pH-Wert, eine Leitfähigkeit, eine lonenstärke, eine Sauerstoffsättigung, eine Flussrate, eine Trübung, eine Viskosität und dergleichen des Prozessfluids 2 und/oder der Gewebeprobe 1 zu erfassen und in entsprechender Weise auf ein durchgeführtes Verfahren einwirken zu können.

## Patentansprüche

1. Verfahren zur Erhöhung der optischen Transparenz von Bereichen einer Gewebeprobe (1), bei dem die Gewebeprobe (1) in eine Prozesskammer (10) eingebracht und in der Prozesskammer (10) mit zumindest einem Prozessfluid (2) infiltriert wird, bei dem eine Entfernung lichtstreuender Strukturen in der Gewebeprobe (1) durchgeführt wird, und bei dem die Transparenz der Gewebeprobe gemessen wird, **dadurch gekennzeichnet, dass** das Verfahren umfasst, die optische Transparenz der Gewebeprobe (1) zumindest während eines Klärungszeitraums, in dem die Gewebeprobe (1) in die Prozesskammer (10) eingebracht ist und die Entfernung der lichtstreuenden Strukturen in der Gewebeprobe (1) durchgeführt wird, mittels einer der Prozesskammer (10) zugeordneten optischen Transparenzmessanordnung (13) zu überwachen, bis durch Infiltration des Porzessfluids und Entfernung lichtstreuender Strukturen aus der Gewebeprobe ausreichend hohe Transparenz hergestellt ist.

2. Verfahren nach Anspruch 1, bei der eine optische Transparenzmessanordnung (13) mit einer Lichtquelle (131) und einem lichtsensitiven Detektor (132) verwendet wird, wobei die Gewebeprobe zwischen der Lichtquelle (131) und dem lichtsensitiven Detektor (132) angeordnet wird.

3. Verfahren nach Anspruch 2, bei dem zumindest eine Lichteigenschaft durch die Lichtquelle (131) bereitgestellten Lichts und/oder zumindest eine Detektionseigenschaft des lichtsensitiven Detektors (132) beeinflusst wird.

4. Verfahren nach einem der vorstehenden Ansprüche, bei dem die Gewebeprobe (1) in der Prozesskammer (10) während des Klärungszeitraums zwischen Elektroden (14) angeordnet wird und die Entfernung der lichtstreuenden Strukturen zumindest das Migrierenlassen von Tensidmicellen durch die Gewebeprobe mittels der Elektroden (14) umfasst.

5. Verfahren nach Anspruch 4, das ferner umfasst, zumindest zeitweise einen Stromfluss zwischen den Elektroden (14) zu überwachen.

6. Verfahren nach einem der vorstehenden Ansprüche, bei dem die Entfernung der lichtstreuenden Strukturen zumindest teilweise durch Herauslösen mittels wenigstens eines organischen Lösungsmittels erfolgt.

7. Verfahren nach einem der vorstehenden Ansprüche, das ferner umfasst, zumindest zeitweise zumindest eine Temperatur des zumindest einen Prozessfluids (2) in der Prozesskammer zu überwachen.

8. Verfahren nach einem der vorstehenden Ansprüche, das ferner umfasst, zumindest zeitweise zumindest eine optische Eigenschaft des zumindest einen Prozessfluids (2) mittels der optischen Transparenzmessanordnung (13) und/oder einer weiteren optischen Anordnung zu überwachen.

9. Verfahren nach einem der vorstehenden Ansprüche, bei dem zumindest zeitweise eine weitere physikalische und/oder chemische Eigenschaft der Gewebeprobe (1) und/oder des zumindest einen Prozessfluids überwacht wird.

10. Verfahren nach einem der vorstehenden Ansprüche, bei dem die Gewebeprobe (1) unter Verwendung von lagedefinierenden Mitteln (15) in der Prozesskammer (10) angeordnet wird.

## Claims

1. Method for increasing the optical transparency of regions of a tissue sample (1), wherein the tissue sample (1) is introduced into a process chamber (10) and infiltrated by at least one process fluid (2) in the process chamber (10), wherein light-scattering structures in the tissue sample (1) are removed, and wherein the transparency of the tissue sample is measured, **characterized in that** the method comprises monitoring the optical transparency of the tissue sample (1) at least during a clearing period, wherein the tissue sample (1) has been introduced into the process chamber (1) and the light-scattering structures in the tissue sample (1) are being removed, by means of an optical transparency measuring arrangement (13) assigned to the process chamber (10), until a sufficiently high transparency has been established by infiltration of the process fluid and removal of light-scattering structures from the tissue sample.

2. Method according to Claim 1, wherein an optical transparency measuring arrangement (13) with a light source (131) and a light-sensitive detector (132) is used, the tissue sample being arranged between the light source (131) and the light-sensitive detector (132).

3. Method according to Claim 2, wherein at least one light property of light provided by the light source (131) and/or at least one detection property of the light-sensitive detector (132) is influenced.

4. Method according to any one of the preceding claims, wherein the tissue sample (1) in the process chamber (10) is arranged between electrodes (14) during the clearing period and the removal of the light-scattering structures at least comprises allowing surfactant micelles to migrate through the tissue sample by means of the electrodes (14).

5. Method according to Claim 4, further comprising at least intermittent monitoring of a current flow between the electrodes (14).

6. Method according to any one of the preceding claims, when the light-scattering structures are at least partly removed by leaching by means of at least one organic solvent.

7. Method according to any one of the preceding claims, further comprising at least intermittent monitoring of at least one temperature of the at least one process fluid (2) in the process chamber.

8. Method according to any one of the preceding claims, further comprising at least intermittent monitoring of at least one optical property of at least one process fluid (2) by means of the optical transparency measuring arrangement (13) and/or a further optical arrangement.

9. Method according to any one of the preceding claims, wherein a further physical and/or chemical property of the tissue sample (1) and/or of the at least one process fluid is monitored at least intermittently.

10. Method according to any one of the preceding claims, wherein the tissue sample (1) is arranged in the process chamber (10) using position-defining means (15).

## Revendications

1. Procédé d'augmentation de la transparence optique de zones d'un échantillon de tissu (1), procédé dans lequel l'échantillon de tissu (1) est introduit dans une chambre de traitement (10) et infiltré par au moins un fluide de traitement (2) dans la chambre de traitement (10), une élimination de structures de diffusion de lumière est effectuée dans l'échantillon de tissu (1), et la transparence de l'échantillon de tissu est mesurée, **caractérisé en ce que** le procédé comprend la surveillance de la transparence optique de l'échantillon de tissu (1) au moins pendant une période d'éclaircissement, au cours de laquelle l'échantillon de tissu (1) est introduit dans la chambre de traitement (10) et l'élimination des structures de diffusion lumière est effectuée dans l'échantillon de tissu (1), au moyen d'un dispositif de mesure de transparence optique (13) associé à la chambre de traitement (10) jusqu'à obtenir une transparence suffisamment élevée par infiltration par le fluide de traitement et élimination des structures de diffusion de lumière de l'échantillon de tissu.

2. Procédé selon la revendication 1, dans lequel un dispositif de mesure de transparence optique (13) comprenant une source de lumière (131) et un détecteur photosensible (132) est utilisé, l'échantillon de tissu étant disposé entre la source de lumière (131) et le détecteur photosensible (132).

3. Procédé selon la revendication 2, dans lequel au moins une propriété lumineuse est influencée par la lumière fournie par la source de lumière (131) et/ou au moins une propriété de détection du détecteur photosensible (132).

4. Procédé selon l'une des revendications précédentes, dans lequel l'échantillon de tissu (1) est disposé dans la chambre de traitement (10) entre les électrodes (14) pendant la période d'éclaircissement et l'élimination des structures de diffusion de lumière comprend au moins la migration de micelles tensioactives à travers l'échantillon de tissu au moyen des électrodes (14).

5. Procédé selon la revendication 4, qui comprend en outre la surveillance au moins temporaire d'un flux de courant entre les électrodes (14).

6. Procédé selon l'une des revendications précédentes, dans lequel l'élimination des structures de diffusion de lumière est effectuée au moins partiellement par dissolution au moyen d'au moins un solvant organique.

7. Procédé selon l'une des revendications précédentes, qui comprend en outre la surveillance au moins temporaire d'au moins une température de l'au moins un fluide de traitement (2) dans la chambre de traitement.

8. Procédé selon l'une des revendications précédentes, qui comprend en outre la surveillance au moins temporaire d'au moins une propriété optique de l'au moins un fluide de traitement (2) au moyen du dispositif de mesure de transparence optique (13) et/ou d'un autre dispositif optique.

9. Procédé selon l'une des revendications précédentes, dans lequel une autre propriété physique et/ou chimique de l'échantillon de tissu (1) et/ou de l'au moins un fluide de traitement est surveillée au moins temporairement.

10. Procédé selon l'une des revendications précédentes, dans lequel l'échantillon de tissu (1) est disposé dans la chambre de traitement (10) à l'aide de moyens de définition de position (15).
